# EUROPEAN PATENT APPLICATION

(11) **EP 4 075 347 A1**
(43) Date of publication of application: **19.10.2022**
(21) Application number: 20898024.3
(22) Date of filing: 17.07.2020
(51) Int. Cl.: G06N 10/00

(54) **QUANTUM CHIP CONTROLLER, QUANTUM COMPUTATION PROCESSING SYSTEM, AND ELECTRONIC DEVICE**

(30) Priority: 13.12.2019 CN 201911284487
(71) Applicant: Origin Quantum Computing Technology Co., Ltd., Innovation Industrial Park Phase High-Tech Zone Hefei (CN)
(72) Inventor: KONG, Weicheng, Hefei, Anhui 230088 (CN); ZHAO, Yongjie, Hefei, Anhui 230088 (CN)
(74) Representative: Hübner, Gerd
(86) International application number: PCT/CN2020/102566
(87) International publication number: WO 2021/114665

(57) **Abstract**

Embodiments of the present specification provide a quantum chip controller (20), a quantum computing processing system (30), and an electronic apparatus (40). The quantum chip controller (20) includes: an instruction execution unit (21) for executing a quantum instruction to generate a quantum event and its corresponding time point; and a quantum chip queue control unit (22) including: an event queue (223) for storing a quantum event to be executed, a time queue (221) for storing a time point corresponding to the quantum event to be executed, and a time counter (222) for counting time, wherein when time being counted in the time counter (222) is equal to a time point in the time queue, a quantum event corresponding to the time point is read out from the event queue (223) and is to be executed by a quantum chip, and wherein the time counter (222) includes an enabling control section (2221) for controlling starting and pausing of counting of the time counter (222).

## Description

### TECHNICAL FIELD

The disclosure relates to the technical field of quantum chips, in particular to a quantum chip controller, a quantum computing processing system and an electronic apparatus.

### BACKGROUND

In a quantum chip, control of a quantum bit is different from that of an ordinary processor. There are strict requirements on the timing in the operation of a quantum bit: if the quantum bits are not operated in a predetermined order, an error may occur.

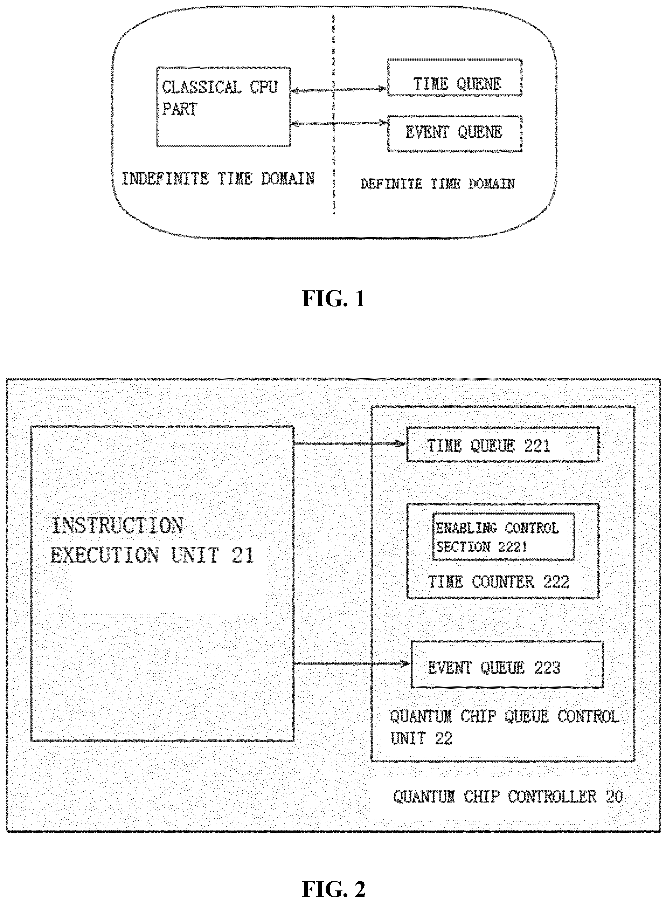

Therefore, when controlling a quantum chip, processing thereof can be categorized into processing of the indefinite time domain and processing of the definite time domain, see Fig. 1. Broadly speaking, all processing of a classical CPU part can be considered as processing in an indefinite time domain, for example, processing where an ordinary computer program is converted into a quantum program, processing where a quantum program is converted into a quantum assembly program, etc. When control of a control device that controls a quantum bit is started, a stricter timing control is required. Processing of this part can be regarded as processing in a definite time domain. A time queue and an event queue are required in a definite time domain to control the timing for executing each event.

Therefore, there is a need to improve the processing in the definite time domain so as to avoid possible errors.

### SUMMARY

Embodiments of the specification provide a novel technical solution for controlling a quantum chip.

According to a first aspect of the specification, a quantum chip controller is provided, including: an instruction execution unit for executing a quantum instruction to generate a quantum event and its corresponding time point; and a quantum chip queue control unit including: an event queue for storing a quantum event to be executed, a time queue for storing a time point corresponding to the quantum event to be executed, and a time counter for counting time, wherein when time being counted in the time counter is equal to a time point in the time queue, a quantum event corresponding to the time point is read out from the event queue and is to be executed by a quantum chip, and wherein the time counter includes an enabling control section for controlling starting and pausing of counting of the time counter..

According to a second aspect of the specification, a quantum computing processing system is provided, including: a decoding conversion apparatus, the decoding conversion apparatus generating a quantum program; the quantum chip controller according to embodiments; a quantum bit control device; and a quantum bit, wherein the quantum chip controller receives quantum instructions in the quantum program and obtains corresponding time points and quantum events, so as to control the quantum bit to perform corresponding quantum operations via the quantum bit control device.

According to a third aspect of the specification, an electronic device is provided, including the quantum computing processing system according to embodiments.

In various embodiments, a clock control can be improved for a quantum chip processing.

Other features and advantages of the disclosure will become clear from detailed description of exemplary embodiments thereof with reference to the accompanying drawings.

### BRIEF DESCRIPTION OF THE DRAWINGS

The accompanying drawings incorporated in the disclosure and forming a part of the disclosure show embodiments of the disclosure and are used together with its description to explain the principles of the disclosure.
FIG. 1 illustrates a schematic illustration of a quantum chip control system.
FIG. 2 illustrates a schematic block diagram of a quantum chip controller according to an embodiment.
FIG 3 illustrates a schematic block diagram of a quantum chip controller according to another embodiment.
FIG. 4 illustrates a schematic block diagram of a quantum computing processing system according to an embodiment.
FIG. 5 illustrates a schematic block diagram of an electronic apparatus according to an embodiment.

### DETAILED DESCRIPTION

Now various exemplary embodiments of the present disclosure will be described in detail with reference to the drawings.

In fact, the following description of at least one exemplary embodiment is for illustrative purposes only and is in no way intended to put any restriction on the present disclosure and its application or use.

It should be noted that similar reference numbers and letters represent similar items in the accompanying drawings. Therefore, once an item is defined in one of the drawings, it need not be discussed further in the subsequent drawings.

### < Quantum Chip Controller >

FIG. 2 illustrates a schematic block diagram of a quantum chip controller according to an embodiment.

As shown in FIG. 2, a quantum chip controller 20 includes: an instruction execution unit 21 and a quantum chip queue control unit 22. The instruction execution unit 21 is used for executing a quantum instruction to generate a quantum event and its corresponding time point. The instruction execution unit 21 performs, for example, an operation in an indefinite time domain. The quantum chip queue control unit 22 includes a time queue 221, a time counter 222 and an event queue 223.

The time queue 221 is configured to store a time point corresponding to a quantum event to be executed. The event queue 223 is configured to store the quantum event to be executed. For example, the event queue and the time queue may be first-in-first-out queues.

The time counter 222 is configured to count time. When the time being counted in the time counter 222 is equal to a time point in the time queue 221, the quantum event corresponding to that time point is read out from the event queue and is to be executed by the quantum chip.

The time counter 222 includes an enabling control section 2221 for controlling starting and pausing of the counting of the time counter.

In consideration of the timing requirements on a quantum bit, here, control of the time counter is added such that the counting of the time counter can be controlled as required. In this way, it is possible to prevent the processing of other parts from malfunctioning due to a too fast counting operation of the time counter. In this way, it is also possible to control the progress of the execution of the program, which for example facilitates debugging of the program.

The enabling control may be implemented in a variety of ways. For example, the enabling control section 2221 is a control pin of the time counter. The enabling control is achieved by configuring the potential of the control pin (e.g., to a logic "1" or "0"). Optionally, the enabling control portion 2221 may be implemented by a control bit of the time counter. For example, the time counter includes an internal control register, and the enabling control is implemented by changing a control bit of the internal control register.

In one example, the enabling control section may be configured to control starting and pausing of the counting of the time counter based on the queue state of the time queue.

The control signal for the time counter is associated with the time queue. That is, the counting of the time counter is determined by the state of the time queue. In this way, it is possible to ensure the co-operation of the time queue and the time counter, thus avoiding errors in quantum operations.

For example, when only one time point is contained in the time queue, the enabling control section is configured to pause the counting of the time counter. In this way, on one hand, it can be ensured that the time counter does not overrun the time queue, which would otherwise cause errors. On the other hand, it can be ensured that all the events of the last time point are not executed until all the events of the last time point have arrived, thereby preventing execution of a part of the events at a certain time point without arrival of all events at that time point. In this way, it is possible to simply and effectively prevent the time being counted in the clock counter from overrunning the time queue, which would otherwise cause errors in the operation of the quantum bit. For example, when only one time point is contained in the time queue and the count value of the time counter is the same as the value of the time point, the enabling control section may be configured to pause the counting of the time counter.

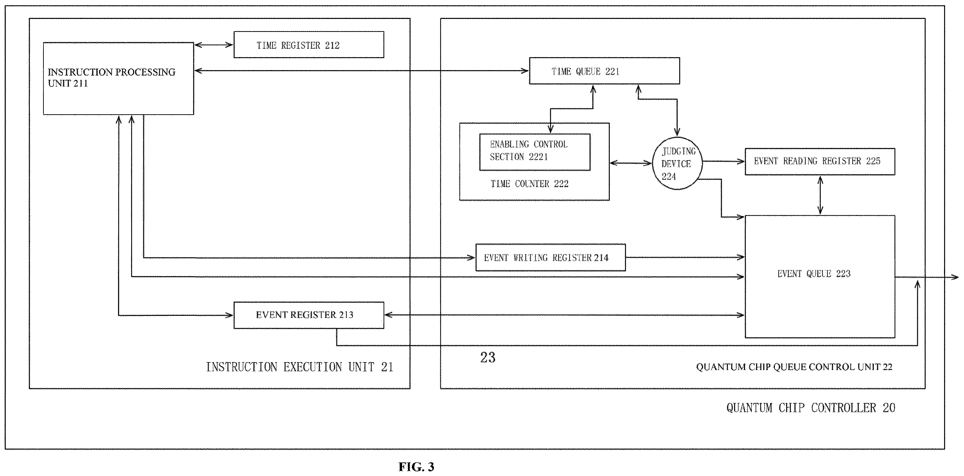

FIG. 3 shows a schematic block diagram of a quantum chip controller according to another embodiment.

As shown in FIG. 3, in the quantum chip controller 20, the instruction execution unit 21 may include an instruction processing unit 211. The instruction processing unit 211 is configured for processing quantum instructions to generate a quantum event and its corresponding time point.

The instruction execution unit 21 may also include an event register 213 and an event writing register 214. The event register 213 stores a quantum event to be added to the event queue 223. The event writing register 214 is configured to record the event number corresponding to the time point, wherein when a new time point is written into the time queue, the event number is updated, and in the case of a quantum event to be added to the event queue 223, the original event number is written into the event queue 223 together with the quantum event. Specifically, the event number can be recorded from 0, and when a new time point is written into the time queue, the event number is incremented by 1. With such a configuration, it is possible to control the timing of writing events to the event queue so as to avoid placing an excessive burden on the processing of the event queue. In addition, in this way, it is also possible to enable events at the same time point to be uniformly bound to the same event number and written into the event queue, thereby improving the processing efficiency of the event queue. By binding events of different quantum bits at the same time point to the same event number, the time being counted by the time counter is the same as the time point represented by the head element of the time queue, and when the event is triggered, the event that needs to be output at this moment can be found from the head element of the event queue of each bit according to the event number.

The instruction execution unit 21 may also include a time register 212 that stores time points to be placed into the time queue 221. When a quantum instruction executed in the instruction execution unit 21 generates a new time point, the new time point is stored in the time register 212 and output to the time queue 221 at the same time, and the quantum event at the previous time point is output from the event register 213 to the event queue 223. In FIG. 3, the quantum chip queue control unit 22 further includes a judging device 224 and an event reading register 225. The event reading register 225 also stores event numbers, that is to record the event number of the event that is to be read out from the event queue. Here, when the time being counted in the time counter is equal to a time point in the time queue, the quantum event with the same number as the event in the event reading register is read out from the event queue. The judging device 224 is used for judging whether the time being counted in the time counter 222 is equal to a time point in the time queue 221, for example, whether it is equal to the time point at the queue head of the time queue 221. When the two are equal, the judging device 224 instructs the time point in the time queue 221 to dequeue, and sends an event readout request to the event queue; and then the event queue 223 reads out the event with the same number as in the event reading register 225 according to the readout request, and sends the event that is read out to a quantum bit control device such as a waveform generator (an arbitrary waveform generator, etc.), so as to control the quantum bit to perform a corresponding event operation. Then, the judging device 224 instructs to update the value in the event reading register 225 to the number of the next event, for example, to increment the value of the event reading register 225 by 1.

In another example, in the case where the counting of the time counter 222 is paused, when the quantum instruction executed by the instruction execution unit 21 generates a new time point, the instruction execution unit 21 outputs a quantum event corresponding to a previous time point by bypassing the event queue via the bypass 23. For example, when the time queue 221 contains only one time point and the count value of the time counter 222 is the same as the value at the time point, the judging device 224 instructs the time counter 222 to pause counting (specifically, to instruct the enabling control section 2221 to pause counting). When a next new quantum instruction received by the instruction execution unit 21 has a prefix indicating that the interval from the time point is "0" (the interval is 0 unit time, that is, the quantum instruction does not generate a new time point), the quantum event contained in the new quantum instruction is stored in the event register 213 as the quantum event corresponding to the time point; when a next new quantum instruction received by the instruction execution unit 21 has a prefix indicating that the interval from the time point is not "0" (that is, the quantum instruction generates a new time point, i.e., a time point next to the time point), the instruction execution unit 21 directly outputs via the bypass 23 (and empties) the quantum event stored in the event register 213 corresponding to the time point, so that the quantum event corresponding to the time point does not need to be added to the event queue. At the same time, the quantum event corresponding to the new time point is stored in the event register 213, the new time point is stored in the time register 212 and output to the time queue 221, and the time counter 222 continues to count and clears the time point in the time queue 221. In this way, it is possible to simplify the processing of event operations corresponding to quantum instructions, for example, omitting the operations of adding the event to the event queue and retrieving the event from the event queue.

Those skilled in the art should understand that FIG. 3 is only a specific embodiment, and not all units shown in FIG. 3 are necessary for implementing the present invention. According to the embodiment shown in FIG. 3, those skilled in the art can also think of many other alternatives, or to omit some units shown in FIG. 3.

### <Quantum Computing Processing System>

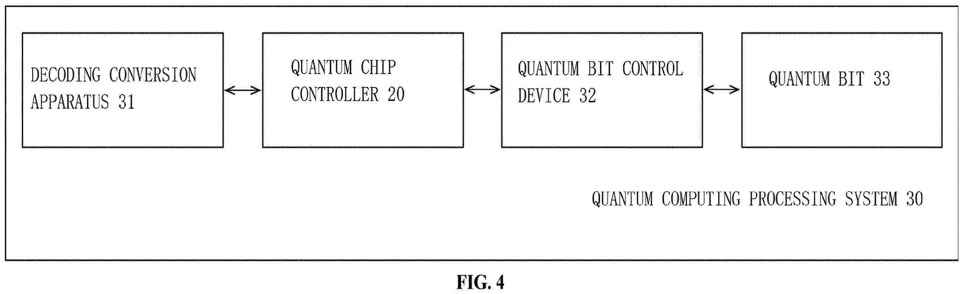

FIG. 4 shows a schematic block diagram of a quantum computing processing system according to one embodiment.

As shown in FIG. 4, the quantum computing processing system 30 includes: a decoding conversion apparatus 31, a quantum chip controller 20, a quantum bit control device 32 and a quantum bit 33. The decoding conversion apparatus 31 generates a quantum program. The quantum chip controller 20 is, for example, the quantum chip controller as described above. The quantum bit control device 32 may be matched with the corresponding quantum bit 33. For example, for a superconducting quantum bit with adjustable frequency, the quantum bit control device 32 may be an arbitrary waveform generator.

The quantum chip controller 20 receives the quantum instructions in the quantum program generated by the decoding conversion apparatus 31 and acquires corresponding time points and quantum events. The quantum chip controller 20 controls the quantum bit 33 via the quantum bit control device 32 to perform corresponding quantum operations.

### <Electronic Apparatus>

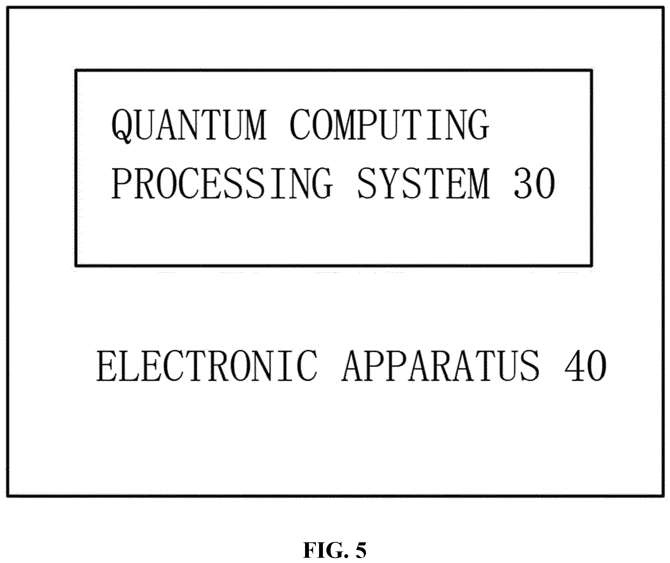

FIG. 5 shows a schematic block diagram of an electronic apparatus according to one embodiment.

As shown in FIG. 5, the electronic apparatus 40 includes the quantum computing processing system 30 disclosed herein. The quantum computing processing system 30 may provide computing power to the electronic apparatus 40. The electronic apparatus 40 may be, for example, a quantum computer or other electronic apparatus with quantum computing capabilities.

### <Example>

A specific example disclosed herein is described below. For example, a quantum program includes the following quantum instructions:

| | |
|---|---|
| 0\|H {001}, X{010} | 1 //Execute a H gate on Q0 and a X gate on Q1 |
| 1\|CNOT1, 2 | 2//Execute a CNOT gate on Q1 and Q2 |
| 0\|Y{001} | 3//Execute a Y gate on Q0 |
| 6\|MEASURE {001} | 4//Execute a measurement operation on Q0 |
| QWAIT 30 | 5//Wait for 30 units of time |
| 0\|H {111} | 6//Execute a Y gate on Q0, Q1 and Q2 |
| QWAIT 10 | 7//Wait for 10 units of time |

In the above quantum instructions, prefixes such as "0|...", "0|..." and "6|..." represent the time interval between the time point contained in the quantum instruction and the time point contained in the previous quantum instruction. The "QWAIT 30" instruction indicates that the time point when this instruction is generated is 30 units of time away from the previous time point (the unit time can be preset), and is a waiting instruction. For the convenience of description, in the above, numbers 1, 2, 3,... 7 are provided for each instruction. Here, the H gate (Hadamard gate), the X gate (Pauli-X, Pauli-X gate), the Y gate (Pauli-Y, Pauli-Y gate) are single quantum logic gates that operate a single quantum bit, and the CNOT gate (Control-Not) is a dual quantum logic gate that operates two quantum bits.

For example, the quantum chip controller 20 shown in FIG. 3 is configured to process the above quantum program. Table 1 shows the states of each register and queue when processing the quantum instructions in the above quantum program.

**Table 1**

| Instruction Number | Whether to Generate a New Time Point | Time Register | Event Writing Register | Event Register | Send to the Time Queue | Send to the Event Queue | Elements in the Time Queue | Elements in the Event Queue |
|---|---|---|---|---|---|---|---|---|
| 0 | | 0 | 0 | 0 | | | 0 | |
| 1 | NO | 0 | 0 | 1 | | | 0 | |
| 2 | YES | 1 | 1 | 2 | 1 | 0\|1 | 1\|0 | 0\|1 |
| 3 | NO | 1 | 1 | 2,3 | | | | |
| 4 | YES | 7 | 2 | 4 | 7 | 1\|2, 3 | 7\1\0 | 1\|2, 3\ 0\|1 |
| 5 | YES | 37 | 3 | | 37 | 2\|4 | 37\7\1\0 | 2\|4\ 1\|2, 3\ 0\|1 |
| 6 | NO | 37 | 3 | 6 | | | | |
| 7 | YES | 47 | 4 | | 47 | 3\|6 | 47\7\1\0 | 3\|6\ 2\|4\ 1\|2, 3\ 0\|1 |

In Table 1, the numbers in the columns represent the following:
Time register: time point; event writing register: event number; event register: instruction number; send to time queue: time point; send to event queue: the left side of "|" is an event number, and the right side thereof is the instruction number corresponding to the event number; elements in the time queue: time point, separated by "\"; elements in the event queue: elements in "send to event queue", separated by "\".

As shown in the table above, the elements of the time queue are always one time point ahead of the time points corresponding to the elements of the event queue. In fact, the event register stores the instruction number and the quantum operation represented by the corresponding instruction (the event opcode as described below), which can also be called a quantum event, while the event queue stores the event number and the quantum operation represented by the corresponding instruction. Table 2 shows the changes to the event register and the event queue.

**Table 2**

| Instruction Number | event writing register | Event Register | | | Event Queue | | |
|---|---|---|---|---|---|---|---|
| | | Q0 | Q1 | Q2 | Q0 | Q1 | Q2 |
| 0 | 0 | 0 | 0 | 0 | 0 | 0 | 0 |
| 1 | 0 | H | X | | | | |
| 2 | 1 | | CONT | CONT | 0\|H | 0\|X | |
| 3 | 1 | Y | CONT | CONT | 0\|H | 0\|X | |
| 4 | 2 | MEASURE | | | 1Y, 0\|H | 1\|CONT, 0\|X | 1\|CONT |
| 5 | 2 | | | | 2\|MEASURE, 1\|Y, 0\|H | 1\|CONT, 0\|X | 1\|CONT |
| 6 | 3 | H | H | H | 2\|MEASURE, 1\|Y, 0\|H | 1\|CONT, 0\|X | 1\|CONT |
| 7 | 4 | | | | 3\|H, 2\|MEASURE, 1\|Y, 0\|H | 3\|H, 1\|CONT, 0\|X | 3\|H, 1\|CONT |

In Table 2, the meaning of "A|B" in the event queue is as follows: A represents the event number, and B represents the opcode. For example, "0|H" means event 0 and opcode H. "Q0", "Q1", and "Q2" correspond to each quantum bit respectively.

First, initialization is executed. The time register is set to 0, the event writing register is also set to 0, and the event register is cleared.

Quantum instruction 1 means that: at time point 0, the H gate is executed on the bit Q0 which is numbered "0", and the X gate is executed on the bit Q1 which is numbered "1". Quantum instruction 1 has a time prefix of 0, with no new time point created, which can be understood that an initial time point is 0. Therefore, only the event code of the quantum instruction is written into the corresponding event register, and the event number of the event is the initial value 0 of the event writing register: the opcode of the H gate is written into the event register of quantum bit Q0, and the opcode of the X gate is written into the event register of quantum bit Q1. Then the next instruction is parsed without the need to update the time queue and the event queue.

Quantum instruction 2 means that: the CNOT gate is executed on the quantum bits Q1 and Q2, with the quantum bit Q1 controlling the quantum bit Q2, i.e., Q1 is the control bit and Q2 is the controlled bit. Because quantum instruction 2 has a non-zero time prefix, a new time point is created, which causes the event queue to be written. When a new time point is generated, the quantum chip queue control unit sends an update signal to update each register: the time register is added with the time prefix of the instruction and changed to 1, while the new time point is written into the time queue; the event corresponding to the previous time point stored in the event register and the event number 0 (stored in the event writing register) are written into the event queue; then, the event writing register is increased by 1 and becomes 1; and the data in the event register is cleared and then the event code of quantum instruction 2 is written to the event register. In the time queue, the time is stored in the form of time points.

Quantum instruction 3 has a time prefix of 0 and no new time points are created. Therefore, there is no need to write to the event queue, nor is there any need to update the time register and the event writing register. Here, the event code of quantum instruction 3 is just superimposed on the event code of the previous instruction. That is, at the same time point, the CNOT gate is executed on quantum bits Q1 and Q2, and the Y gate is executed on quantum bit Q0.

Quantum instruction 4 has a non-zero time prefix and a new time point is created. The execution process of quantum instruction 4 is similar to that of quantum instruction 2. Here, the event writing register is incremented by 1 and becomes 2. Redundant descriptions thereof are omitted here.

Quantum instruction 5 is the QWAIT instruction. It functions to make the system wait for a while. If the time point of the QWAIT instruction is not 0, each queue and register will be updated. The time register is updated to 30+7=37, and 37 is written into the time queue; the event number 2 in the event writing register and the quantum event at the previous time point (corresponding to quantum instruction 4) stored in the event register are written into the event queue; finally, the event writing register is incremented by 1 and becomes 3, and the event register is cleared.

Quantum instruction 6 means that: the H gate is executed on the quantum bits Q0, Q1, and Q2. The quantum instruction 6 has a time prefix of 0. The execution process of quantum instruction 6 is similar to that of quantum instruction 3. Redundant descriptions thereof are omitted here.

Quantum instruction 7 is similar to the quantum instruction 5. Redundant descriptions thereof are omitted here.

Next, the processing in the quantum chip queue control unit will be described.

First, it is assumed that the processing speed of the instruction execution unit 21 is fast, and the quantum chip queue control unit 22 does not need to wait.

In the initialization phase, the time counter 222 starts counting from 0; the event reading register 225 also starts from 0 to read the events in the event queue; the time queue 221 retains a time point 0; and the event queue 223 is cleared.

When the time count in the time counter 222 is the same as the time point at the queue head of the time queue 221, the event opcode with the same number as in the event reading register 225 is read out from the event queue 223. Then, the time point at the queue head of the time queue 221 is excluded, and the event read register 225 is incremented by one.

Second, if the processing speed of the instruction execution unit 21 is slow, the time queue 221 in the quantum chip queue control unit 22 may become empty, which may cause errors. To this end, through the enabling control section 2221, the count of the time counter 222 is paused when the time count in the time counter 222 is the same as the time point at the queue head of the time queue 221 and the time queue 221 contains only one time point. When the next new time point is to be written, which means that all events at the previous time point have arrived and have been added into event register 213, the events stored in the event register 213 do not need to be written into the event queue 223, instead, they can be directly output via the bypass 23; at this time, the event reading register 225 can also be updated as usual.

For example, after quantum instruction 5, that is, QWAIT 30 stops (quantum instruction 5 generates a new time point), the subsequent quantum instruction 6: 0|H{111} is received, indicating that the H gate operation is executed on Q0, Q1, and Q2. Quantum instruction 6 has a time prefix of 0, and the event corresponding to this instruction is added into the event register 213. Next, the next instruction is parsed, and a new time point "47" is generated, indicating that all events at the previous time point have arrived and there is only the event corresponding to the quantum instruction 6; at this time, the only remaining time point in the time queue is the time point corresponding to quantum instruction 6. However, the time counting has reached this time point and is in a paused state, and there is no need to add the quantum instruction 6 into the event queue 223, rather, the event corresponding to the quantum instruction 6 is directly output via the bypass 23.

It should be understood by those skilled in the art that the above specific examples are only used to illustrate the implementation of the embodiments, rather than to limit the scope of the present disclosure.

Unless clearly stated otherwise, such terms "first" and "second" as used herein are only for distinguishing things referred to by nouns that follow them, rather than to indicate order and / or priorities thereof.

The above embodiments can incorporate each other by reference. Therefore, for simplicity, repeated description of a former embodiment is omitted in the description of a latter embodiment.

Although certain embodiments of the disclosure are described above, there may also be other embodiments that are within the scope of the accompanying claims. In some cases, actions or steps recited in the claims may be performed in an order other than those described in the embodiments, and still brings in desired results. In addition, the desired results do not require a process illustrated in the drawings to necessarily follow specific order or continuous order as shown. In some embodiments, multitasking and parallel processing are also possible or may be advantageous.

## Claims

1. A quantum chip controller, comprising:
an instruction execution unit for executing a quantum instruction to generate a quantum event and its corresponding time point; and
a quantum chip queue control unit, comprising:
an event queue for storing a quantum event to be executed,
a time queue for storing a time point corresponding to the quantum event to be executed, and
a time counter for counting time,
wherein when time being counted in the time counter is equal to a time point in the time queue, a quantum event corresponding to the time point is read out from the event queue and is to be executed by a quantum chip, and
wherein the time counter comprises an enabling control section for controlling starting and pausing of counting of the time counter.

2. The quantum chip controller of claim 1, wherein the enabling control section is a control pin of the time counter or a control bit of the time counter.

3. The quantum chip controller of claim 1 or 2, wherein the event queue and the time queue are first-in-first-out queues.

4. The quantum chip controller of any one of claims 1-3, wherein the enabling control section is configured to control starting and pausing of the counting of the time counter based on a queue state of the time queue.

5. The quantum chip controller of any one of claims 1-4, wherein the enabling control section is configured to pause the counting of the time counter when only one time point is included in the time queue.

6. The quantum chip controller of any one of claims 1-5, wherein the enabling control section is configured to pause the counting of the time counter when only one time point is included in the time queue and a count value of the time counter is the same as the value at the time point.

7. The quantum chip controller of any one of claims 1-6, wherein in the case where the counting of the time counter is paused, the instruction execution unit outputs a quantum event corresponding to a previous time point by bypassing the event queue via a bypass when the quantum instruction executed by the instruction execution unit generates a new time point.

8. The quantum chip controller of any one of claims 1-7, wherein the instruction execution unit comprises an instruction processing unit for processing a quantum instruction to generate a quantum event and its corresponding time point.

9. The quantum chip controller of any one of claims 1-8, wherein the instruction execution unit further comprises:
an event register for storing a quantum event to be added into the event queue;
an event writing register for recording an event number corresponding to the time point, wherein the event number is updated when a new time point is written into the time queue, and when there is a quantum event to be added into the event queue, the original event number is written into the event queue together with the quantum event; and
an event reading register for recording an event number of an event to be read out from the event queue, wherein when time being counted in the time counter is equal to a time point in the time queue, a quantum event with the same event number as in the event reading register is read out from the event queue.

10. The quantum chip controller of any one of claims 1-9, wherein the instruction execution unit further comprises: an event register for storing a quantum event to be added into the event queue; and a time register for storing a time point to be added into the event queue,
wherein when a quantum instruction executed in the instruction execution unit generates a new time point, the new time point is stored in the time register and simultaneously output to the time queue, and a quantum event at a previous time point is output from the event register to the event queue.

11. A quantum computing processing system, comprising:
a decoding conversion apparatus, the decoding conversion apparatus generating a quantum program;
the quantum chip controller of any one of claims 1-10;
a quantum bit control device; and
a quantum bit;
wherein the quantum chip controller receives quantum instructions in the quantum program and obtains corresponding time points and quantum events, so as to control the quantum bit to perform corresponding quantum operations via the quantum bit control device.

12. An electronic apparatus, comprising the quantum computing processing system of claim 11.
